# EUROPÄISCHE PATENTSCHRIFT

(11) **EP 1 116 372 B1**
(45) Veröffentlichungstag und Bekanntmachung des Hinweises auf die Patenterteilung: **16.07.2003**
(21) Anmeldenummer: 98942448.6
(22) Anmeldetag: 22.09.1998
(51) Int. Cl.: H04M 3/50

(54) **MITTEILUNGSZENTRALE UND VERFAHREN ZUR VERBREITUNG VON MITTEILUNGEN IN TELEFONNETZEN**
MESSAGE EXCHANGE AND METHOD FOR DISTRIBUTING MESSAGES IN TELEPHONE NETWORKS
CENTRAL DE MESSAGERIE ET PROCEDE DE DIFFUSION DE MESSAGES DANS DES RESEAUX TELEPHONIQUES

(43) Veröffentlichungstag der Anmeldung: 18.07.2001
(73) Patentinhaber: Swisscom AG, 3000 Bern 29 (CH)
(72) Erfinder: MESSMER, Bruno, CH-3600 Thun (CH)
(74) Vertreter: BOVARD AG - Patentanwälte
(86) Internationale Anmeldenummer: CH9800407
(87) Internationale Veröffentlichungsnummer: WO00018096

(56) Entgegenhaltungen:
- EP-A- 0 106 575
- EP-A- 0 844 746
- WO-A-97/28628
- WO-A-97/39569
- US-A- 5 260 986
- US-A- 5 333 180
- US-A- 5 541 981
- US-A- 5 699 412
- US-A- 5 717 738

## Beschreibung

Die vorliegende Erfindung betrifft eine Mitteilungszentrale und ein Verfahren zur Verbreitung von Mitteilungen in Telefonnetzen, insbesondere betrifft sie eine Mitteilungszentrale und ein Verfahren zur Entgegennahme und Abspeicherung von gesprochenen Mitteilungen und zur Übermittlung dieser Mitteilungen an einen oder mehrere Teilnehmer im öffentlichen geschalteten Telefonnetz, an weiche die Mitteilungen adressiert sind.

Das Patentdokument EP 377379 A1 beschreibt eine automatische Telefonanrufsvorrichtung, welche es ermöglicht, Mitteilungen und dazugehörige Übermittlungsprofile mit der Nummer des Adressaten, Datum und Zeitpunkt der ersten Mitteilungsübermittlung, Frequenz weiterer Übermittlungsversuche sowie Datum und Zeitpunkt des letzten Übermittlungsversuchs abzuspeichern, wobei die Mitteilungen und Übermittlungsprofile aus der Distanz über eine Telefonverbindung eingegeben werden können. Wollen mehrere Benutzer die Dienste einer in EP 377379 A1 beschriebenen Telefonanrufsvorrichtung in Anspruch nehmen müssen sie über eine eigene, ans öffentliche geschaltete Telefonnetz angeschlossene Vorrichtung verfügen, da die in EP 377379 A1 beschriebene Telefonanrufsvorrichtung nicht für mehrere Benutzer geeignet ist. Zudem erlaubt es die in EP 377379 A1 beschriebene Telefonanrufsvorrichtung einem Benutzer nicht eine Mitteilung an mehrere Adressaten zu übermitteln.

Ein Funktelefonsystem für Automobile, welches vom Benutzer über ein Spracherkennungsmodul gesteuert werden kann, ist im Patentdokument EP 177405 A1 beschrieben. Mit dem beschriebenen sprachgesteuerten System können insbesondere auch Mitteilungen vorbereitet, abgespeichert und unter Verwendung von abgespeicherten Telefonnummern übermittelt werden. Auch das in EP 177405 A1 beschriebene Funktelefonsystem ist nur für einen Benutzer ausgelegt und erlaubt einem Benutzer nicht eine Mitteilung an mehrere Adressaten zu übermitteln.

Die Patentschrift US 4856066 beschreibt ein elektronisches System und ein Verfahren zum Erstellen, Abspeichern und Übermitteln von Mitteilungen mittels gesprochener Sprache. Insbesondere beschreibt die Patentschrift US 4856066 die Möglichkeit, einen oder mehrere Adressaten (Gruppen) mittels gesprochenen Eingaben zu bestimmen. Routing Instruktionen oder Schaltbefehle werden durch wortweise Analyse eingegebener Befehle oder durch Abfragen von gespeicherten Informationen auf Grund gesprochener Befehle erhalten. Abgespeicherte Mitteilungen können zu ebenfalls mündlich eingegebenen vorausbestimmten Zeitpunkten übermittelt werden. Wie in den oben beschriebenen Dokumenten beschreibt auch die Patentschrift US 4856066 ein System, respektive ein Verfahren, welche nicht für mehrere Benutzer ausgelegt sind.

Die Patentschrift US 5146487 beschreibt ein Verfahren, welches einem Benutzer eines Telefonapparats erlaubt, eine Mitteilung vorzubereiten und einen dazugehörigen Adressaten zu bestimmen und die Mitteilung an diesen übermitteln zu lassen, indem er unter Menuführung entsprechende Eingabetasten drückt. Das in der Patentschrift US 5146487 beschriebene Verfahren ist nicht dafür ausgelegt eine Mitteilung an mehrere Adressaten zu übermitteln. Obwohl das in US 5146487 beschriebene Verfahren dafür geeignet ist von mehreren Benutzern Mitteilungen entgegenzunehmen und abzuspeichern kann dem Verfasser einer Mitteilung keine direkte Anwort übermittelt werden.

Die Patentschrift US 5260986 beschreibt ein Mitteilungssystem in einem geschalteten Telefonnetz, welches ermöglicht, Listen mit Teilnehmemamen und zugehörigen Rufnummern zu erstellen, und basierend auf solchen Listen automatisch eine gesprochene Nachricht an alle darin enthaltene Teilnehmer zu übermitteln.

Die Patentschrift US 5717741 beschreibt ein Verfahren um Mitteilungen von Teilnehmern in einem Telefonnetz entgegenzunehmen und jeweils zusammen mit der Rufnummer des betreffenden Teilnehrners abzuspeichern.

Die Patentschrift US 5717738 beschreibt ein Telefonsystem mit Spracherkennung, in welchem Teilnehmer Listen mit Teilnehmernamen und zugeordneten Rufnummern erstellen können.

Die Patentschrift US 5333180 beschreibt ein Mitteilungsübermittlungssystem, welches eine Mitteilung entgegennehmen und automatisch an einen definierten Teilnehmer übermitteln kann, wobei ein angerufener Teilnehmer aufgefordert werden kann, eine Anwort einzugeben und diese Anwort entgegengenommen werden kann. Gemäss US 5333180 kann die Mitteilung jedoch nicht an mehrere Teilnehmer übermittelt werden.

Es ist eine Aufgabe dieser Erfindung, eine neue Vorrichtung und ein neues Verfahren zur Entgegennahme, Abspeicherung und Übermittlung von gesprochenen Mitteilungen in Telefonnetzen vorzuschlagen, welche es insbesondere ermöglichen Mitteilungen und Antworten auf Mitteilungen von mehreren Teilnehmern eines öffentlichen geschalteten Telefonnetzes entgegenzunehmen.

Gemäss der vorliegenden Erfindung wird dieses Ziel insbesondere durch die Elemente des kennzeichnenden Teils der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass in der Mitteilungszentrale, welche mit dem öffentlichen geschalteten Telefonnetz verbunden ist, welche ein Empfangsmodul umfasst, das gesprochene Mitteilungen von einer Pluralität von Teilnehmern im genannten Telefonnetz über dieses genannte Telefonnetz entgegennehmen und abspeichern kann, welche ein Adressmodul umfasst, um eine Pluralität von Listen mit Teilnehmeridentifizierungen zu speichern, wobei diese Listen jeweils mindestens einem Teilnehmer im genannten Telefonnetz zugeordnet sind und von diesen Teilnehmern mit Diensten des genannten Adressmoduls verwaltet werden können und wobei im genannten Adressmodul mindestens gewisse Teilnehmeridentifizierungen in einer genannten Liste eines Teilnehmers zu einer Gruppe zusammengefasst sind, an die Mitteilungen adressiert werden können, und welche ein Übermittlungsmodul umfasst, das abgespeicherte Mitteilungen mittels automatischem Anruf an die betreffenden Teilnehmer übermitteln kann, das Empfangsmodul so eingerichtet ist, dass es eine entgegengenommene Mitteilung jeweils zusammen mit einer automatisch bestimmten Identifizierung, zum Beispiel die Rufnummer des Teilnehmers, der die Mitteilung übermittelt hat, abspeichert, dass die Mitteilungszentrale ein Spracherkennungsmodul umfasst, so dass Teilnehmer Mitteilungen an Teilnehmer und/oder Gruppen von Teilnehmern adressieren können, indem sie die betreffenden Teilnehmer und/oder Gruppen von Teilnehmern mittels gesprochener Sprache benennen und an die Mitteilungszentrale übermitteln, wobei das Spracherkennungsmodul die vom Teilnehmer benannten Teilnehmer und/oder Gruppen von Teilnehmern in der genannten Liste des betreffenden Teilnehmers identifiziert, und dass die Mitteilungszentrale ein Antwortmodul umfasst, das Antworten eines Teilnehmers, an den Mitteilungen übermittelt wurden, entgegennehmen und für den betreffenden Teilnehmer abspeichern kann, der die Mitteilung übermittelte.

Eine solche Mitteilungszentrale hat den Vorteil, dass die Teilnehmer im Telefonnetz keine speziellen, persönlichen Endgeräte benötigen um Mitteilungen abzuspeichern und an einen oder mehrere andere Teilnehmer im Telefonnetz übermitteln zu lassen. Zudem kann eine an eine solche Mitteilungszentrale übermittelte und dort abgespeicherte Mitteilung eindeutig dem übermittelnden Teilnehmer zugeordnet werden, so dass diesem, beispielsweise, Resultate über den Ausgang der Meldungsübermittlung und/oder Antworten des empfangenden Teilnehmers übermittelt werden können.

In einer Ausführungsvariante können die Listen mit Teilnehmeridentifizierungen auch Zugriffsrechte enthalten, so dass beispielsweise der Zugriff auf eine bestimmte Liste, allen Teilnehmern gestattet werden kann, die in der betreffenden Liste eingetragen sind.

In verschiedenen Ausführungsvarianten umfasst eine Teilnehmeridentifizierung in der genannten Liste den Namen und/oder die Rufnummer eines Teilnehmers. In einer Variante werden mindestens gewisse der Teilnehmeridentifizierungen als Sprachsignale abgespeichert.

In einer Ausführungsvariante ermöglicht das Spracherkennungsmodul Teilnehmern zudem, die genannten Listen mittels gesprochener Sprache zu erstellen und zu verwalten.

In verschiedenen Ausführungsvarianten umfasst die Mitteilungszentrale mindestens eine Tariftabelle und/oder eine Tabelle mit statistischen Informationen über die Verkehrslast im genannten Telefonnetz, wobei das Übermittlungsmodul der Mitteilungszentrale Mitteilungen zu günstigen Tarifzeiten und/oder zu Zeiten mit niederer Verkehrslast an die adressierten Teilnehmer übermitteln kann.

Vorzugsweise speichert das Übermittlungsmodul der Mitteilungszentrale Statusinformationen betreffend der Übermittlung von Mitteilungen an Teilnehmer ab und kann nicht erfolgreich übermittelte Mitteilungen wiederholt übermitteln.

In einer bevorzugten Ausführungsvariante kann das genannte Antwortmodul von einem Teilnehmer, an den Mitteilungen übermittelt wurden, Mitteilungen, die an eine Gruppe von Teilnehmern adressiert sein können, als Antwort entgegennehmen, abspeichern und an die adressierten Teilnehmer übermitteln.

In einer Ausführungsvariante werden mindestens gewisse Mitteilungen via das Internet übermittelt, wobei ein entsprechender Gateway jeweils zwischen das öffentliche geschaltete Telefonnetz und das Internet geschaltet ist.

Nachfolgend wird eine Ausführung der vorliegenden Erfindung anhand eines Beispieles beschrieben. Das Beispiel der Ausführung wird durch folgende beigelegte Figuren illustriert:
Figur 1 zeigt ein Blockdiagramm, welches schematisch den Aufbau der Mitteilungszentrale illustriert, die mit dem öffentlichen geschalteten Telefonnetz verbunden ist.
Figur 2 zeigt ein Flussdiagramm, welches die Ausführung einer Mitteilungsübermittlung vereinfacht darstellt.

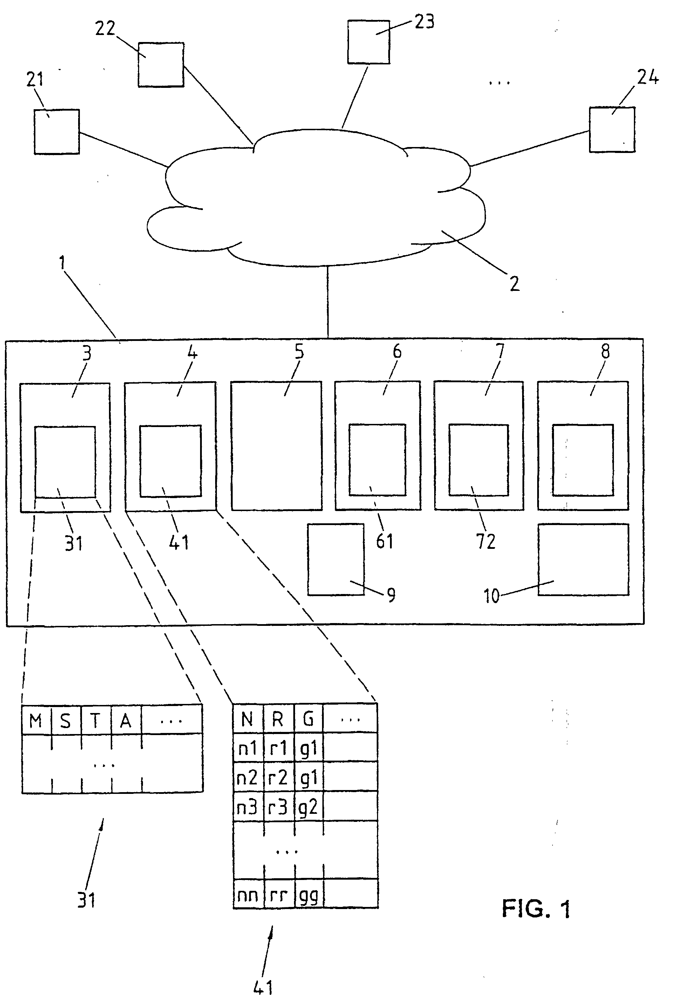

In der Figur 1 bezieht sich das Bezugszeichen 2 auf das öffentliche geschaltete Telefonnetz, an welches mehrere Endgeräte 21-24 angeschlossen sind, wobei diese Endgeräte 21-24 auch die betreffenden Teilnehmer 21-24 im öffentlichen geschalteten Telefonnetz 2 repräsentieren.

Das Bezugszeichen 1 bezieht sich auf ein Ausführungsbeispiel der erfindungsgemässen Mitteilungszentrale, welche mit dem öffentlichen geschalteten Telefonnetz 2 verbunden ist. Die Mitteilungszentrale 1 umfasst mehrere Module, auf die wir später näher eingehen werden, auf mindestens einem Server, beispielsweise ein handelsüblicher Server, der über die nötigen Mittel verfügt um ans öffentliche geschaltete Telefonnetz 2 angeschlossen zu werden, oder eine handelsübliche Telefonschaltzentrale.

Die Mitteilungszentrale 1 umfasst ein Empfangsmodul 3, welches ein Softwaremodul ist, das heisst ein Computer Programm, das auf dem Server der Mitteilungszentrale 1 installiert ist und das über einen ihm zugewiesenen Speicherbereich 31 verfügt, beispielsweise auf einem oder mehreren Festplattenspeichern, die sich auf dem Server oder in einem mit diesem Server verbundenen Laufwerk befinden. Ein Teilnehmer 21, der eine gesprochene Mitteilung an einen oder mehrere andere Teilnehmer 22-24 im öffentlichen geschalteten Telefonnetz 2 übermitteln lassen möchte, ruft beispielsweise die Dienstnummer der Mitteilungszentrale 1 an. Das Empfangsmodul 3 der Mitteilungszentrale 1 nimmt den Anruf mittels herkömmlichen Kommunikationsdiensten entgegen und bestimmt automatisch die Identifizierung, zum Beispiel die Rufnummer, des anrufenden Teilnehmers 21. Danach führt das Empfangsmodul 3 den anrufenden Teilnehmer 21 mittels gesprochenen Anweisungen durch die Aufnahmeprozedur, dabei werden vom Teilnehmer 21 eine gesprochene Mitteilung und die Identifizierung von einem oder mehreren Teilnehmern, an die die Mitteilung übermittelt werden soll, abgefragt und entgegengenommen. Das Empfangsmodul 3 speichert in der Tabelle 31, die in Figur 1 schematisch dargestellt ist, die Meldung M, beispielsweise in digitalisierter Form, die automatisch bestimmte Identifizierung S des übermittelnden Teilnehmers 21, beispielsweise dessen Rufnummer, sowie die Identifizierungen der Teilnehmer, an die die Mitteilung adressiert ist, das heisst die Adressaten A der zu übermittelnden Mitteilung. Wie in der Figur 1 angedeutet ist kann die Tabelle 31 auch weitere Datenelemente speichern, die vom übermittelnden Teilnehmer 21 eingegeben werden, zum Beispiel ein Datum und/oder eine Zeitangabe an oder bevor welchen die Mitteilung an die Adressaten übermittelt werden sollen. In der Figur 1 weist die Tabelle 31 zusätzlich ein Statusfeld T auf, das wir später beschreiben werden.

Für die Eingabe und Abspeicherung der Identifizierung der Teilnehmer, an die die Mitteilung adressiert ist, gibt es verschiedene mögliche Ausführungsvarianten. In einer ersten Variante kann der übermittelnde Teilnehmer einen Adressaten bestimmen, indem er dessen Rufnummer mittels den Wähltasten seines Endgeräts, beispielsweise ein Telefon, eingibt. Diese Rufnummer kann dann vom Empfangsmodul 3 entgegengenommen, überprüft und in der Tabelle 31 abgespeichert werden. Diese Variante hat den Vorteil, dass sie einfach zu implementieren ist, hat aber allerdings den Nachteil, dass deren Benutzung für den übermittelnden Teilnehmer vor allem dann umständlich ist, wenn dieser die Mitteilung an mehrere Teilnehmer übermitteln möchte.

In einer zweiten Variante wird der Adressat vom übermittelnden Teilnehmer bestimmt, indem dieser mittels den Wähltasten seines Endgeräts den Namen oder eine Kennzahl eines Teilnehmers oder einer Gruppe von Teilnehmern mittels den Wähltasten seines Endgeräts eingibt. In dieser Variante wird der eingetippte Name oder die Kennzahl vom Empfangsmodul 3 entgegengenommen und beispielsweise mit den Einträgen in einer persönlichen Liste 41 des übermittelnden Teilnehmers 21 verglichen, auf deren Verwaltung wir später eingehen werden. Wie der in Figur 1 schematisch dargestellten Tabelle 41 entnommen werden kann, entspricht zum Beispiel der Wert der eingetragenen Gruppe G=g1 zwei Teilnehmern mit den Namen N=n1 und N=n2, respektive deren Rufnummern R=r1 und R=r2, oder der Wert des eingetragenen Namens N=n3 entspricht der Rufnummer R=r3. Das Empfangsmodul 3 kann entsprechend die Rufnummern r1 und r2, respektive r3, als Identifizierung der Teilnehmer, an die die Mitteilung übermittelt werden soll, das heisst als Adressat A in die Tabelle 31 eintragen. Es ist vorteilhaft diese Konversion der eingetippten Werte auf die entsprechenden Rufnummern gleich vom Empfangsmodul durchführen zu lassen, weil dabei etwaige Unstimmigkeiten, beispielsweise fehlende Einträge, vom übermittelnden Teilnehmer 21 korrigiert werden können. Diese zweite Variante hat gegenüber der ersten Variante den Vorteil, dass der übermittelnde Teilnehmer 21 weniger Zahlen eintippen muss.

In einer dritten erfindungsgemässen Variante bestimmt der übermittelnde Teilnehmer 21 die Adressaten, indem er deren Namen und/oder den Namen einer Gruppe von Teilnehmern mittels gesprochener Sprache an die Mitteilungszentrale 1 übermittelt, wo sie vom Empifangsmodul 3 entgegengenommen werden. Ähnlich wie in der zweiten Variante vergleicht das Empfangsmodul 3 die entgegengenommenen Namen und/oder Gruppennamen mit den Einträgen in der oben erwähnten persönlichen Liste 41 des übermittelnden Teilnehmers 21 und bestimmt die dazugehörenden Rufnummern. Dazu können die Dienste eines Spracherkennungmoduls 8 der Mitteilungszentrale 1 verwendet werden, welche auf kommerziell verfügbaren Softwareprogrammen basieren und welche die entgegengenommenen gesprochenen Namen in Text verwandeln, der mit den alphanumerisch gespeicherten Namen und/oder Gruppennamen der persönlichen Liste 41 verglichen wird. Das Empfangsmodul 3 kann als Alternative über programmierte Vergleichsalgorithmen verfügen, mittels welchen die entgegengenommenen gesprochenen Namen mit den Namen und/oder Gruppennamen der persönlichen Liste 41 verglichen werden, die in diesem Fall als Sprachsignale abgespeichert sind. Es ist vorteilhaft, dass gleich zu diesem Zeitpunkt Gruppennamen, beispielsweise der Wert von g1, direkt in die entsprechenden dazugehörenden Teilnehmer konvertiert werden, beispielsweise die Werte der Rufnummern r1 und r2.

Für einen Teilnehmer 21-24 gibt es verschiedene Möglichkeiten seine persönliche Liste mittels den Diensten eines Adressmoduls 4 zu verwalten, wobei das Adressmodul 4 wiederum ein Softwaremodul ist, das beispielsweise auf dem Server der Mitteilungszentrale installiert ist und das über einen ihm zugewiesenen Speicherbereich 41 verfügt, welcher auch für das Empfangsmodul 3 zugänglich ist. Ein Teilnehmer 21-24 kann beispielsweise, ähnlich wie für die Aufgabe einer Mitteilung beschrieben wurde, die Dienstnummer der Mitteilungszentrale 1 anrufen, dabei können zum Beispiel verschiedene Dienstnummern für die Aufgabe einer Mitteilung und für die Verwaltung von persönlichen Adresslisten 41 vorgesehen werden, oder die verschiedenen Funktionen können unter einer gemeinsamen Dienstnummer mittels eines sprachgeführten Menus ausgewählt werden. Das Adressmodul 4 der Mitteilungszentrale 1 führt den interessierten Teilnehmer 21-24 mittels gesprochenen Anweisungen durch die Verwaltungsprozedur für dessen persönliche Liste 41 von Teilnehmern, an welche er Mitteilungen übermitteln lassen möchte. Dabei werden vom interessierten Teilnehmer 21-24 je nach Ausführungsvariante die Namen N und/oder Rufnummern R von Teilnehmern sowie Gruppen von Teilnehmern, die aus einem Gruppennamen G und den zugehörigen Teilnehmern N, R bestehen, entgegengenommen und in der in Figur 1 schematisch dargestellten Liste 41 abgespeichert. In verschiedenen Varianten werden die Werte vom interessierten Teilnehmer 21-24 mittels der Tasten seines Endgerätes eingetippt oder als gesprochene Sprache übermittelt. Werte, die mittels gesprochener Sprache übermittelt werden, zum Beispiel der Name eines Teilnehmers oder einer Gruppe von Teilnehmern, können vom Adressmodul 4 als Sprachsignale abgespeichert oder mittels der oben erwähnten Dienste des Spracherkennungsmoduls 8 konvertiert und als alphanumerische Daten abgespeichert werden.

In einer zusätzlichen oder alternativen Variante kann ein Teilnehmer 21-24 seine persönliche Liste mittels Internetdiensten des Adressmoduls 4 verwalten, auf die er über das nicht dargestellte Internet zugreifen kann. In diesem Fall sind wenigstens gewisse Dienste des Adressmoduls 4 als programmierte Funktionen über einen Web-Server verfügbar. Der Vorteil der Verwaltung der persönlichen Listen mittels Internetdiensten besteht darin, dass den interessierten Teilnehmern dadurch eine leicht bedienbare graphische Benutzeroberfläche angeboten werden kann, welche sich für die Eingabe von alphanumerischen Informationen und insbesondere für eine effiziente Verwaltung der oben beschriebenen Gruppen eignet.

Wie in der Figur 1 angedeutet ist können in den Listen 41 zusätzlich zu den Teilnehmeridentifizierungen auch andere Informationen abgespeichert werden, zum Beispiel Zugriffsrechte mittels denen der Schreib- und/oder Lesezugriff auf einen Eintrag in einer persönlichen Liste oder der Zugriff auf eine ganze persönliche Liste anderen Teilnehmern gestattet, respektive versperrt, werden kann, zum Beispiel allen Teilnehmern, die in dieser Liste enthalten sind, oder nur gewissen ausgewählten Teilnehmern. Diese Zugriffsrechte können zum Beispiel auch mittels Diensten des Adressmoduls 4, ähnlich wie oben beschrieben, verwaltet werden.

In der Mitteilungszentrale 1 wird eine Mitteilung M, die zusammen mit der Identifizierung S des übermittelnden Teilnehmers 21 und der Identifizierung A eines oder mehreren Teilnehmers in der Tabelle 31 abgespeichert wurde, von einem Übermittlungsmodul 5 an den oder die Adressaten übermittelt. Das Übermittlungsmodul 5 ist wiederum ein Softwaremodul ist, das heisst ein Computer Programm, das auf dem Server der Mitteilungszentrale installiert ist und das Zugriff auf mindestens eine Tariftabelle 9 hat, welche beispielsweise auf einem oder mehreren Festplattenspeichern abgelegt ist, die sich auf dem Server der Mitteilungszentrale 1 oder in einem mit diesem Server verbundenen Laufwerk befinden. Der Zeitpunkt der Übermittlung einer Mitteilung wird beispielsweise vom Übermittlungsmodul 5 unter Berücksichtigung der oben erwähnten Datums- und/oder Zeitangaben sowie der in der Tariftabelle 9 abgespeicherten Tarifstufen bestimmt. Zusätzlich oder als Alternative kann der Zeitpunkt der Übermittlung auch von der Last auf dem öffentlichen geschalteten Telefonnetz 2 abhängig gemacht werden, welche dem Übermittlungsmodul 5 von einem Modul 6 zur Bestimmung der Verkehrslast geliefert wird. Das Modul 6 kann vom Fachmann so ausgeführt werden, dass es die aktuelle Last auf dem öffentlichen geschalteten Telefonnetz 2 bestimmt, oder dass es diese Last als von einem externen Prozess erfasste statistische Werte in einer Tabelle 61 abgespeichert hat.

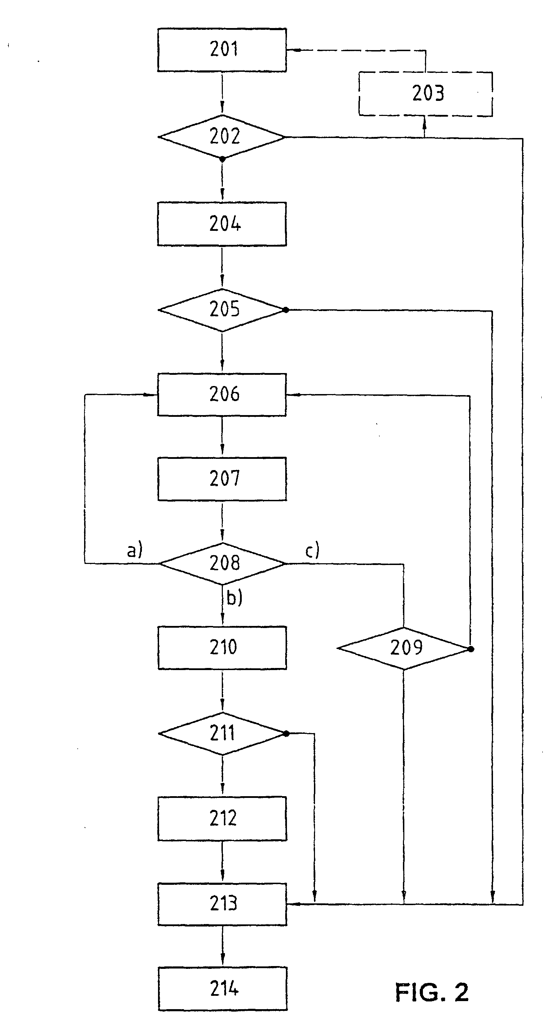

In der Figur 2 ist die Übermittlung einer Mitteilung an einen Adressaten anhand eines Beispieles in einem Flussdiagramm vereinfacht dargestellt. Im Schritt 201 ruft das Übermittlungsmodul 5 der Mitteilungszentrale 1 unter Zuhilfenahme von herkömmlichen Kommunikationsdiensten die Rufnummer eines Teilnehmers 22-24 an, die, wie oben beschrieben, in der Tabelle 31 für die betreffende Mitteilung abgelegt ist.

Zusätzlich oder als Alternative kann das Übermittlungsmodul 5 auch Zugang zum Internet haben, so dass beispielsweise ab einer gewissen Tarifstufe, zum Beispiel für Ferngespräche über grosse Distanzen, der Anruf zum Teilnehmer über das Internet aufgebaut und die Mitteilung über das Internet übermittelt wird, wobei zwischen dem öffentlichen geschalteten Telefonnetz und dem Internet jeweils ein entsprechender Gateway eingesetzt wird.

Im Schritt 202 bestimmt das Übermittlungsmodul 5 ob die Leitung zum Endgerät des angerufenen Teilnehmers besetzt ist. Falls dies der Fall ist, fährt das Übermittlungsmodul 5 im Schritt 213 fort, wo der Anruf beendet wird. Wie wir später beschreiben werden, wird danach ein entsprechender Status gesetzt und ein erneuter Versuch die Mitteilung zu übermitteln wird zu einem späteren Zeitpunkt unternommen werden. In einer alternativen Variante wartet das Übermittlungsmodul 5, wie in der Figur 2 gestrichelt angedeutet, im Schritt 203, beispielsweise für eine vordefinierte Zeit, und ruft danach den betreffenden Teilnehmer im Schritt 201 erneut an.

Wenn die Leitung zum angerufenen Teilnehmer frei ist, übermittelt das Übermittlungsmodul 5 im Schritt 204 eine gesprochene Ankündigung der Mitteilung und fragt den angerufenen Teilnehmer ob er die angekündigte Mitteilung hören möchte. Der entsprechende Text lautet beispielsweise foigendermassen:

"Dies ist eine Mitteilung von Herrn X. Die Mitteilung wird Ihnen in drei Sekunden abgespielt. Bitte antworten Sie mit Ja oder Nein, ob Sie die Mitteilung hören möchten."

Im Schritt 205 überprüft das Übermittlungsmodul 5 nach einer vordefinierten Zeitspanne die Antwort des angerufenen Teilnehmers auf die im Schritt 204 gestellte Frage, beispielsweise unter Zuhilfenahme des oben erwähnten Spracherkennungsmoduls 8. Falls die Antwort Nein ist, fährt das Übermittlungsmodul 5 im Schritt 213 fort, wo der Anruf beendet wird. Ansonsten, wenn die Anwort Ja ist oder wenn keine Anwort gegeben wird, beispielsweise weil der Anruf von einem automatisierten Anrufbeantworter entgegengenommen wurde, wird die betreffende in der Tabelle 31 abgespeicherte Mitteilung M dem angerufenen Teilnehmer im Schritt 206 abgespielt.

Nachdem die Mitteilung abgespielt wurde übermittelt das Übermittlungsmodul 5 im Schritt 207 die gesprochene Frage, ob der angerufene Teilnehmer die Mitteilung nochmals hören möchte, beispielsweise:

"Bitte antworten Sie mit Ja oder Nein, ob Sie die Mitteilung nochmals hören möchten."

Im Schritt 208 überprüft das Übermittlungsmodul 5 nach einer vordefinierten Zeitspanne die Antwort des angerufenen Teilnehmers auf die im Schritt 210 gestellte Frage, beispielsweise, wie oben erwähnt, unter Zuhilfenahme des Spracherkennungsmoduls 8. Falls die Antwort Ja ist, fährt das Übermittlungsmodul 5 im Schritt 206 fort und wiederholt die Abspielung der Mitteilung. Falls die Anwort auf die Frage im Schritt 207 Nein ist, fährt das Übermittlungsmodul 5 im Schritt 210 fort. Falls auf die Frage im Schritt 207 keine Antwort gegeben wurde, beispielsweise weil der Anruf von einem automatisierten Anrufbeantworter entgegengenommen wurde, wird im Schritt 209 überprüft ob die betreffende Mitteilung dem angerufenen Teilnehmer bereits wiederholt abgespielt wurde, beispielsweise mittels eines dafür vorgesehenen Flags. Falls die Mitteilung dem angerufenen Teilnehmer bereits wiederholt abgespielt wurde fährt das Übermittlungsmodul 5 im Schritt 213 fort, wo der Anruf beendet wird. Andernfalls, wenn die Mitteilung dem betreffenden Teilnehmer noch nicht wiederholt abgespielt wurde, setzt das Übermittlungsmodul 5 das oben erwähnte Flag und fährt im Schritt 206 fort, wo die Abspielung der Mitteilung wiederholt wird.

Im Schritt 210 übermittelt das Übermittlungsmodul 5 dem angerufenen Teilnehmer die gesprochene Frage, ob er dem Teilnehmer, der die Mitteilung übermittelte, eine Antwort geben möchte, beispielsweise:

"Bitte antworten Sie mit Ja oder Nein, ob Sie eine Antwort geben möchten."

Im Schritt 211 überprüft das Übermittlungsmodul 5 nach einer vordefinierten Zeitspanne die Antwort des angerufenen Teilnehmers auf die im Schritt 210 gestellte Frage, beispielsweise, wie oben erwähnt, unter Zuhilfenahme des Spracherkennungsmoduls 8. Falls die Antwort Nein ist oder falls keine Antwort gegeben wird, fährt das Übermittlungsmodul 5 im Schritt 213 fort, wo der Anruf beendet wird. Ansonsten, wenn die Antwort Ja ist, aktiviert das Übermittlungsmodul 5 im Schritt 212 das Anwortmodul 7, ein Softwaremodul, welches eine gesprochene Antwort des angerufenen Teilnehmers entgegennimmt und in einem ihm zugänglichen Speicherbereich abspeichert. Der Speicherbereich ist beispielsweise eine Tabelle 72, welche zum Beispiel auf einem oder mehreren Festplattenspeichern abgelegt ist, die sich auf dem selben Server oder in einem mit diesem Server verbundenen Laufwerk befinden. Zudem sorgt das Antwortmodul 7 auch dafür, dass die gespeicherte Antwort mit der betreffenden Mitteilung und dem betreffenden angerufenen Teilnehmer verknüpft wird, beispielsweise indem für die betreffende Mitteilung M in der Tabelle 31 ein entsprechender Zeiger eingetragen wird.

In einer Ausführungsvariante kann das Anwortmodul 7 so beschaffen sein, dass es beispielsweise mittels Sprachführung dem angerufenen Teilnehmer die Option anbietet, an Stelle einer einfachen Antwort an den übermittelnden Teilnehmer, diesem und wahlweise anderen Teilnehmern eine Mitteilung übermitteln zu lassen, beispielsweise an alle oder an ausgewählte Teilnehmer, an die die ursprüngliche Mitteilung adressiert war, oder auch an zusätzliche Teilnehmer. Aus Gründen der Vertraulichkeit kann diese Ausführungsvariante so implementiert werden, dass diese Option vom Teilnehmer, der die ursprüngliche Mitteilung aufgegeben hat, gesperrt werden kann, beispielsweise wenn dieser den angerufenen Teilnehmer nicht wissen lassen möchte an wen die Mitteilung adressiert war, oder der Zugang zu dieser Option kann mittels der oben erwähnten Zugriffsrechte auf die Einträge in einer persönlichen Liste 41 kontrolliert werden. Prinzipiell kann das Anwortmodul 7 so realisiert werden, dass es dem angerufenen Teilnehmer die Funktionalität des Empfangsmoduls 3, wie oben beschrieben, anbietet, um ihm damit zu ermöglichen zur Beantwortung der erhaltenen Mitteilung selber eine Mitteilung einzugeben und von der Mitteilungszentrale 1 an eine Gruppe von Teilnehmern übermitteln zu lassen.

Wie oben bereits erwähnt wurde beendet das Übermittlungsmodul 5 den Anruf an den angerufenen Teilnehmer im Schritt 213. Danach wird im Schritt 214 die dem Ausgang des Anrufes entsprechende, das heisst die dem Ausgang der Übermittlung der Mitteilung M an den angerufenen Teilnehmer entsprechende Statusinformation T in der Tabelle 31 eingetragen. Die Statusinformation einer Mitteilung an einen bestimmten Teilnehmer enthält beispielsweise Informationen über den Erfolg oder Misserfolg der Übermittlung dieser Mitteilung, über die Anzahl Übermittlungsversuche, über den Zeitpunkt der letzten Übermittlung, oder über die Verfügbarkeit einer Antwort des angerufenen Teilnehmers. Wie bereits angetönt wurde, wird für Mitteilungen, die nicht erfolgreich übermittelt werden konnten, zu einem späteren Zeitpunkt ein erneuter Versuch unternommen, wobei die Anzahl zu wiederholende Versuche beispielsweise auf eine vordefinierte Zahl begrenzt sein kann.

Diese Statusinformationen sowie die entgegengenommenen und abgespeicherten Antworten können dem betreffenden übermittelnden Teilnehmer beispielsweise mittels eines Abfragemoduls 10 zugänglich gemacht werden. Das Abfragemodul 10 ist wiederum ein Softwaremodul, das beispielsweise auf dem Server der Mitteilungszentrale installiert ist und das Zugang zu den Informationen in der Tabelle 31 und zu den gespeicherten Antworten in der Tabelle 72 hat. Ein Teilnehmer 21-24 kann beispielsweise, wie bereits oben beschrieben wurde, die Dienstnummer der Mitteilungszentrale 1 anrufen, wobei zum Beispiel verschiedene Dienstnummern für die Aufgabe einer Mitteilung, für die Verwaltung von persönlichen Adresslisten 41, oder für die Abfrage von Statusinformationen und Antworten vorgesehen werden können, oder wobei die verschiedenen Funktionen unter einer gemeinsamen Dienstnummer mittels eines sprachgeführten Menus ausgewählt werden können. Das Abfragemodul 10 der Mitteilungszentrale 1 führt den interessierten Teilnehmer 21-24 mittels gesprochenen Anweisungen durch die Abfrageprozedur für Informationen über dessen aufgegebenen Mitteilungen. Ähnlich wie dies für die Verwaltung der persönlichen Listen beschrieben wurde könnten auch diese Abfragedienste mittels Internetdiensten über einen Web-Server angeboten werden.

Die beschriebene Mitteilungszentrale 1 sowie das Verfahren zur Entgegennahme, Abspeicherung und Übermittlung von Mitteilungen in Telefonnetzen eignet sich für die verschiedensten Anwendungen. Zum Beispiel können dadurch Gruppen von Leuten, beispielsweise eine Schulklasse, eine Sportmannschaft, oder ganz allgemein eine Interessengemeinschaft, informiert werden, beispielsweise über ein bevorstehendes Ereignis oder eine Planänderung, ohne dass der Anrufende jedes einzelne Gespräch und insbesondere wiederholte Anrufe wegen besetzten Leitungen selber manuell durchführen muss. Mit der beschriebenen Erfindung ist es auch möglich automatische Umfragen durchzuführen, indem einer vordefinierten Gruppe von angerufenen Personen Fragen gestellt werden, die sie beantworten können. Es ist natürlich auch praktisch eine Mitteilung an einzelne Personen übermitteln zu lassen, die schwer erreichbar sind, ohne dass man dafür eine eigene Mitteilungsvorrichtung anschaffen und installieren muss.

An dieser Stelle sollte auch erwähnt werden, dass es für gewisse Anwendungen durchaus auch vorteilhaft sein kann, dass sich Teilnehmer in dafür vorgesehene öffentlichen Gruppen eintragen können, je nach Anwendung kann eine solche öffentliche Gruppe frei oder nur gegen Bezahlung zugänglich sein. Der Zugang zu einer öffentlichen Gruppe kann beispielsweise über dafür vorgesehene Internetdienste erfolgen. Alle Teilnehmer, die sich in eine solche öffentliche Gruppe eingetragen haben, werden in der Folge einen Anruf mit einer Mitteilung bekommen, auf die sie gegebenenfalls auch antworten können.

Obwohl dies bis anhin nicht erwähnt wurde ist es durchaus auch möglich mit der vorliegenden Erfindung an Stelle oder zusätzlich zu den gesprochenen Mitteilungen auch Fax-Mitteilungen und/oder andere Daten zu übermitteln.

Ein Betreiber einer Mitteilungszentrale kann interessierten Teilnehmern die oben beschriebenen Dienste zum Beispiel zu einem Pauschaltarif anbieten oder er kann sie in Abhängigkeit der Anzahl übermittelten Mitteilungen verrechnen. Zudem kann es vorteilhaft sein, auch den Speicherbereich zu verrechnen, der vom betreffenden Teilnehmer zur Speicherung der persönlichen Teilnehmerliste und/oder der aufgegebenen Mitteilungen verwendet wird.

Neben dem Verkauf von kompletten Mitteilungszentralen an interessierte Betreiber kann es auch interessant sein, die beschriebenen Softwareprogramme separat zu vertreiben, zum Beispiel mittels Datenträgern mit darauf gespeicherten Programmen zur Steuerung von Computern, beispielsweise handelsübliche Server, gemäss dem oben beschriebenen Verfahren.

Text für das Flussdiagramm in Figur 2:
- 201: Teilnehmer anrufen.
- 202: Besetzt?
- 203: Warten.
- 204: "Dies ist eine Mitteilung von Herrn X. Die Mitteilung wird Ihnen in drei Sekunden abgespielt. Bitte antworten Sie mit Ja oder Nein, ob Sie die Mitteilung hören möchten."
- 205: Ist die Antwort Ja oder keine Antwort?
- 206: Mitteilung abspielen.
- 207: "Bitte antworten Sie mit Ja oder Nein, ob Sie die Mitteilung nochmals hören möchten."
- 208: Ist die Antwort entweder a) Ja, oder b) Nein, oder c) keine Antwort?
- 209: Mitteilung bereits wiederholt abgespielt?
- 210: "Bitte antworten Sie mit Ja oder Nein, ob Sie eine Antwort geben möchten."
- 211: Ist die Antwort Ja?
- 212: Antwort entgegennehmen und abspeichern.
- 213: Anruf beenden.
- 214: Statusinformation aktualisieren.

## Patentansprüche

1. Mitteilungszentrale (1) zur Entgegennahme und Abspeicherung von gesprochenen Mitteilungen und zur Übermittlung dieser Mitteilungen an einen oder mehrere Teilnehmer (21-24) im öffentlichen geschalteten Telefonnetz (2), mit welchem die Mitteilungszentrale (1) verbunden ist, wobei die Mitteilungszentrale (1) ein Adressmodul (4) umfasst, um eine Pluralität von Listen (41) mit Teilnehmeridentifizierungen (N, R) zu speichern, wobei die genannten Listen (41) jeweils mindestens einem Teilnehmer (21-24) im genannten Telefonnetz (2) zugeordnet sind, und wobei im genannten Adressmodul (4) mindestens gewisse Teilnehmeridentifizierungen (n1, n2, r1, r2) in einer genannten Liste (41) eines Teilnehmers zu einer Gruppe (g1) zusammengefasst sind, wobei die Mitteilungszentrale (1) ein Empfangsmodul (3) umfasst, um genannte Mitteilungen von Teilnehmern (21-24) im genannten Telefonnetz (2) über dieses genannte Telefonnetz (2) entgegenzunehmen und abzuspeichern, und wobei die Mitteilungszentrale (1) ein Übermittlungsmodul (5) umfasst, um abgespeicherte Mitteilungen (M) mittels automatischem Anruf an bestimmte Teilnehmer und/oder Gruppen von Teilnehmern zu übermitteln, **dadurch gekennzeichnet,**
**dass** das Empfangsmodul (3) eingerichtet ist, um von Teilnehmern (21-24) entgegengenommene Mitteilungen jeweils zusammen mit einer Identifizierung (S) des Teilnehmers, der die Mitteilung (M) aufgegeben hat, abzuspeichern,
**dass** die Mitteilungszentrale (1) ein Spracherkennungsmodul (8) umfasst, welches einem Teilnehmer ermöglicht, die Teilnehmer und/oder Gruppen von Teilnehmern, an welche eine Mitteilung adressiert werden soll, mittels gesprochener Sprache zu bestimmen,
**dass** die Mitieilungszentrale (1) ein Antwortmodul (7) zum Entgegennehmen und Abspeichern von Antworten eines Teilnehmers umfasst, an den Mitteilungen übermittelt wurden.

2. Mitteilungszentrale (1) gemäss vorhergehendem Anspruch, **dadurch gekennzeichnet, dass** das genannte Spracherkennungsmodul (8) einem Teilnehmer ermöglicht die genannten Listen (41) mittels gesprochener Sprache zu erstellen und zu verwalten.

3. Mitteilungszentrale (1) gemäss einem der vorhergehenden Ansprüche, **dadurch gekennzeichnet, dass** eine genannte Teilnehmeridentifizierung den Namen (n1, n2, n3) des betreffenden Teilnehmers umfasst.

4. Mitteilungszentrale (1) gemäss einem der vorhergehenden Ansprüche, **dadurch gekennzeichnet, dass** eine genannte Teilnehmeridentifizierung die Rufnummer (r1, r2, r3) des betreffenden Teilnehmers umfasst.

5. Mitteilungszentrale (1) gemäss einem der vorhergehenden Ansprüche, **dadurch gekennzeichnet, dass** mindestens gewisse der genannten Teilnehmeridentifizierungen (N, R, G) als Sprachsignale abgespeichert sind.

6. Mitteilungszentrale (1) gemäss einem der vorhergehenden Ansprüche, **dadurch gekennzeichnet, dass** sie mindestens eine Tariftabelle (9) umfasst, welche dem genannten Übermittlungsmodul (5) ermöglicht mindestens gewisse Mitteilungen zu günstigen Tarifzeiten zu übermitteln.

7. Mitteilungszentrale (1) gemäss einem der vorhergehenden Ansprüche, **dadurch gekennzeichnet, dass** sie eine Tabelle (61) mit statistischen Informationen über die Verkehrslast im genannten Telefonnetz (2) umfasst, welche dem genannten Übermittlungsmodul (5) ermöglicht mindestens gewisse Mitteilungen zu Zeiten mit niederer Verkehrslast zu übermitteln.

8. Mitteilungszentrale (1) gemäss einem der vorhergehenden Ansprüche, **dadurch gekennzeichnet, dass** das genannte Antwortmodul (7) von einem Teilnehmer, an den Mitteilungen übermittelt wurden, Mitteilungen, die an eine Gruppe von Teilnehmern adressiert sein können, als Antwort entgegennehmen, abspeichern und an die adressierten Teilnehmer übermitteln kann.

9. Mitteilungszentrale (1) gemäss einem der vorhergehenden Ansprüche, **dadurch gekennzeichnet, dass** eine genannte Liste (41) auch Zugriffsrechte enthält.

10. Verfahren zum Entgegennehmen und Abspeichern von gesprochenen Mitteilungen und zur Übermittlung dieser Mitteilungen an einen oder mehrere Teilnehmer (21-24) im öffentlichen geschalteten Telefonnetz (2), in welchem Verfahren eine Pluralität von Listen (41) mit Teilnehmeridentifizierungen (N, R) in einer mit dem genannten Telefonnetz (2) verbundenen Mitteilungszentrale (1) gespeichert werden, wobei die Listen (41) jeweils mindestens einem Teilnehmer (21-24) im genannten Telefonnetz (2) zugeordnet werden, und wobei mindestens gewisse Teilnehmeridentifizierungen (n1, n2, r1, r2) in einer genannten Liste (41) eines Teilnehmers zu einer Gruppe (g1) zusammengefasst werden, in welchem Verfahren in der Mitteilungszentrale (1) Mitteilungen von Teilnehmern (21-24) im öffentlichen geschalteten Telefonnetz (2) über das genannte Telefonnetz (2) entgegengenommen und abgespeichert werden, in welchem Verfahren abgespeicherte Mitteilungen (M) von der Mitteilungszentrale (1) mittels automatischem Anruf an identifizierte Teilnehmer und/oder Gruppen von Teilnehmern übermittelt werden, **dadurch gekennzeichnet,**
**dass** in der Mitteilungszentrale (1) Mitteilungen, die von Teilnehmern (21-24) entgegengenommen wurden, jeweils zusammen mit einer Identifizierung des Teilnehmers (S), der die Mitteilung (M) aufgegeben hat, abgespeichert werden,
**dass** Teilnehmer Mitteilungen an Teilnehmer undloder Gruppen von Teilnehmern adressieren, indem sie der Mitteilungszentrale (1) die betreffenden Teilnehmer und/oder Gruppen von Teilnehmern mittels gesprochener Sprache benennen,
**dass** ein Spracherkennungsmodul (8) in der Mitteilungszentrale (1) die vom Teilnehmer benannten Teilnehmer und/oder Gruppen von Teilnehmern in der genannten Liste (41) des betreffenden Teilnehmers identifiziert, und
**dass** Antworten eines Teilnehmers, an den Mitteilungen übermittelt wurden, durch die Mitteilungszentrale (1) entgegengenommen und abgespeichert werden.

11. Verfahren gemäss vorhergehendem Anspruch, **dadurch gekennzeichnet, dass** mindestens gewisse der genannten Teilnehmeridentifizierungen (N, R, G) als Sprachsignal abgespeichert werden.

12. Verfahren gemäss einem der Ansprüche 10 oder 11, **dadurch gekennzeichnet, dass** Statusinformationen betreffend der Übermittlung von Mitteilungen an Teilnehmer abgespeichert werden, und dass nicht erfolgreich übermittelte Mitteilungen wiederholt übermittelt werden können.

13. Verfahren gemäss einem der Ansprüche 10 bis 12, **dadurch gekennzeichnet, dass** mindestens eine Tariftabelle (9) überwacht wird und mindestens gewisse Mitteilungen zu günstigen Tarifzeiten an die adressierten Teilnehmer übermittelt werden.

14. Verfahren gemäss einem der Ansprüche 10 bis 13, **dadurch gekennzeichnet, dass** statistischen Informationen über die Verkehrslast im genannten Telefonnetz (2) in einer Tabelle (61) gespeichert werden, und dass mindestens gewisse Mitteilungen zu Zeiten mit niederer Verkehrslast an die adressierten Teilnehmer übermittelt werden.

15. Verfahren gemäss einem der Ansprüche 10 bis 14, **dadurch gekennzeichnet, dass** mindestens gewisse Mitteilungen via das Internet übermittelt werden.

16. Verfahren gemäss einem der Ansprüche 10 bis 15, **dadurch gekennzeichnet, dass** von einem Teilnehmer, an den Mitteilungen übermittelt wurden, Mitteilungen, die an eine Gruppe von Teilnehmern adressiert sein können, als Antwort entgegegennommen, abgespeichert und an die adressierten Teilnehmer übermittelt werden.

17. Verfahren gemäss einem der Ansprüche 10 bis 16, **dadurch gekennzeichnet, dass** die genannten Listen (41) von mindestens gewissen Teilnehmern mittels gesprochener Sprache verwaltet werden.

18. Computer-lesbarer Datenträger, der codierte Daten enthält, die ein Computer Programm repräsentieren, welches ermöglicht, eine Mitteilungszentrale (1) gemäss einem der Ansprüche 1 bis 9 so zu steuern, dass sie ein Verfahren gemäss einem der Ansprüche 10 bis 17 ausführt.

## Claims

1. Message exchange (1) for receiving and storing spoken messages and for transmitting these messages to one or more subscribers (21-24) in the public switched telephone network (2), with which the message exchange (1) is connected, the message exchange (1) comprising an address module (4) in order to store a plurality of lists (41) with subscriber identifications (N, R), the said lists (41) being assigned in each case to at least one subscriber (21-24) in the said telephone network (2), and in the said address module (4) at least certain subscriber identifications (n1, n2, r1, r2) in a said list (41) of a subscriber being combined into a group (g1), the message exchange (1) comprising a receiving module (3) in order to receive and store said messages from subscribers (21-24) in the said telephone network (2) via this said telephone network (2), and the message exchange (1) comprising a transmission module (5) in order to transmit stored messages (M) by means of automatic call to particular subscribers and/or groups of subscribers, **characterised**
**in that** the receiving module (3) is set up to store messages received from subscribers (21-24) in each case together with an identification (S) of the subscriber who has placed the message (M),
**in that** the message exchange (1) comprises a speech recognition module (8), which makes it possible for a subscriber to determine by means of spoken language the subscribers and/or groups of subscribers to whom or which a message is supposed to be addressed,
**in that** the message exchange (1) comprises a reply module (7) for receiving and storing replies of a subscriber to whom messages were transmitted.

2. The message exchange (1) according to the preceding claim, **characterised in that** the said speech recognition module (8) makes it possible for a subscriber to create and to administer the said lists (41) by means of spoken language.

3. The message exchange (1) according to one of the preceding claims, **characterised in that** a said subscriber identification comprises the name (n1, n2, n3) of the respective subscriber.

4. The message exchange (1) according to one of the preceding claims, **characterised in that** a said subscriber identification comprises the call number (r1, r2, r3) of the respective subscriber.

5. The message exchange (1) according to one of the preceding claims, **characterised in that** at least certain of the said subscriber identifications (N, R, G) are stored as voice signals.

6. The message exchange (1) according to one of the preceding claims, **characterised in that** it comprises at least one tariff table (9), which makes it possible for the said transmission module (5) to transmit at least certain messages at times having economical tariffs.

7. The message exchange (1) according to one of the preceding claims, **characterised in that** it comprises a table (61) with statistical information on the traffic load in the said telephone network (2), which makes it possible for the said transmission module (5) to transmit at least certain messages at times of low traffic load.

8. The message exchange (1) according to one of the preceding claims, **characterised in that** the said reply module (7) can receive as reply, store and transmit to the addressed subscribers messages from a subscriber to whom messages were sent, which messages can be addressed to a group of subscribers.

9. The message exchange (1) according to one of the preceding claims, **characterised in that** a said list (41) also contains access rights.

10. A method of receiving and storing spoken messages and of transmitting these messages to one or more subscribers (21-24) in the public switched telephone network (2), in which method a plurality of lists (41) with subscriber identifications (N, R) are stored in a message exchange (1) connected to the said telephone network (2), the lists (41) being assigned in each case to at least one subscriber (21-24) in the said telephone network (2), and at least certain subscriber identifications (n1, n2, r1, r2) in a said list (41) of a subscriber being combined in a group (g1), in which method, in the message exchange (1), messages of subscribers (21-24) in the public switched telephone network (2) are received and stored via the said telephone network (2), in which method stored messages (M) are transmitted by the message exchange (1) by means of automatic call to the identified subscribers and/or groups of subscribers, **characterised**
**in that** in the message exchange (1) messages which have been received from subscribers (21-24) are stored in each case together with an identification of the subscriber (S) who has given the message (M),
**in that** subscribers address messages to subscribers andlor groups of subscribers by designating to the message exchange (1) the respective subscribers or groups of subscribers by means of spoken language,
**in that** a speech recognition module (8) in the message exchange (1) identifies in the said list (41) of the respective subscriber the said subscribers and/or groups of subscribers designated by the subscriber, and
**in that** replies of a subscriber, to whom messages were transmitted, are received and stored by the message exchange (1).

11. The method according to the preceding claim, **characterised in that** at least certain of the said subscriber identifications (N, R, G) are stored as voice signal.

12. The method according to one of the claims 10 to 11, **characterised in that** status information is stored concerning the transmission of messages to subscribers, and messages not successfully transmitted can be repeatedly transmitted.

13. The method according to one of the claims 10 to 12, **characterised in that** at least one tariff table (9) is monitored, and at least certain messages are transmitted to addressed subscribers at economical tariff times.

14. The method according to one of the claims 10 to 13, **characterised in that** statistical information on the traffic load in the said telephone network (2) is stored in a table (61), and at least certain messages are transmitted to the addressed subscribers at times of low traffic load.

15. The method according to one of the claims 10 to 14, **characterised in that** at least certain messages are transmitted via the Internet.

16. The method according to one of the claims 10 to 15, **characterised in that** messages from a subscriber to whom messages were sent are received as reply, stored and transmitted to the addressed subscribers, which messages can be addressed to a group of subscribers.

17. The method according to one of the claims 10 to 16, **characterised in that** the said lists (41) are administered by means of spoken language by at least certain subscribers.

18. A computer-readable data carrier which contains coded data which represent a computer program, which program makes it possible to control a message exchange (1) according to one of the claims 1 to 9 in such a way that it carries out a method according to one of the claims 10 to 17.

## Revendications

1. Centrale de messagerie (1) pour la réception et le stockage de messages vocaux et pour la transmission de ces messages à un ou plusieurs abonnés (21-24) dans le réseau téléphonique publique commuté (2), auquel est reliée la centrale de messagerie (1), la centrale de messagerie (1) comprenant un module d'adresse (4) pour stocker une pluralité de listes (41) comportant des identifications d'abonnés (N, R), lesdites listes (41) étant associées respectivement à au moins un abonné (21-24) dans ledit réseau téléphonique (2) et dans ledit module d'adresse (4), au moins certaines identifications d'abonné (n1 , n2, r1, r2) dans une dite liste (41) d'un abonnée étant rassemblées en un groupe (g1), la centrale de messagerie (1) comprenant un module de réception (3) pour recevoir et stocker desdits messages d'abonnées (21-24) dans ledit réseau téléphonique (2) par l'intermédiaire de ce dit réseau téléphonique (2), et la centrale de messagerie (1) comprenant un module de transmission (5) pour transmettre les messages stockés (M) au moyen d'un appel automatique de certains abonnés et/ou groupes d'abonnés, **caractérisée**
**en ce que** le module de réception (3) est configuré pour stocker des messages reçus par des abonnés (21-24) respectivement ensemble avec une identification (S) de l'abonné qui a laissé le message (M),
**en ce que** la centrale de messagerie (1) comprend un module de reconnaissance vocale (8) qui permet à un abonné de définir par la parole les abonnés ou les groupes d'abonnés auxquels doit s'adresser un message,
**en ce que** la centrale de messagerie (1) comprend un module de réponse (7) pour la réception et le stockage de réponse d'un abonné auquel ont été transmis des messages.

2. Centrale de messagerie (1) selon la revendication précédente, **caractérisée en ce que** ledit module de reconnaissance vocale (8) permet à un abonné d'administrer lesdites listes (41) par la parole.

3. Centrale de messagerie (1) selon l'une des revendications précédentes, **caractérisée en ce qu'**un dite identification comprend le nom (n1, n2, n3) de l'abonné considéré.

4. Centrale de messagerie (1) selon l'une des revendications précédentes, **caractérisée en ce qu'**un dite identification comprend le numéro de téléphone (r1, r2, r3) de l'abonné considéré.

5. Centrale de messagerie (1) selon l'une des revendications précédentes, **caractérisée en ce qu'**au moins certaines desdites identifications d'abonnés (N, R, G) sont stockées sous forme de signaux vocaux.

6. Centrale de messagerie (1) selon l'une des revendications précédentes, **caractérisée en ce qu'**elle comprend au moins une grille des tarifs (9) qui permet audit module de transmission (5) de transmettre au moins certains messages à des périodes de tarifs avantageux.

7. Centrale de messagerie (1) selon l'une des revendications précédentes, **caractérisée en ce qu'**elle comprend un tableau (61) avec des informations statistiques sur la charge de trafic dans ledit réseau téléphonique (2), ce qui permet audit module de transmission (5) de transmettre au moins certains messages à des périodes de charge de trafic moindre.

8. Centrale de messagerie (1) selon l'une des revendications précédentes, **caractérisée en ce que** ledit module de réponse (7) peut recevoir, stocker et transmettre à des abonnées destinataires sous forme de réponse, des messages d'un abonné auquel ont été transmis des messages, message qui peuvent être adressés à un groupe d'abonnés.

9. Centrale de messagerie (1) selon l'une des revendications précédente, **caractérisée en ce qu'**une dite liste (41) comprend également des droits d'accès.

10. Procédé pour la réception et le stockage de messages vocaux et pour la transmission de ces messages à un ou plusieurs abonnés (21-24) dans le réseau téléphonique publique commuté (2), procédé dans lequel la pluralité de listes (40) est stockée dans une centrale de messagerie (1) reliée audit réseau téléphonique (2)avec des identifications d'abonnés (N, R), lesdites listes (41) étant associées respectivement à au moins un abonné (21-24) dans ledit réseau téléphonique (2) et dans ledit module d'adresse (4), au moins certaines identifications d'abonné (n1 , n2, r1, r2) dans une dite liste (41) d'un abonnée étant rassemblées en un groupe (g1), procédé dans lequel la centrale de messagerie (1) des messages d'abonnés (21-24) sont réceptionnés et stockés dans ledit réseau téléphonique (2) par l'intermédiaire de ce dit réseau téléphonique (2), et procédé dans lequel des messages stockés (M) sont transmis par la centrale de messagerie (1) au moyen d'un appel automatique aux abonnés identifiés et/ou groupes d'abonnés, **caractérisé**
**en ce que** la centrale de messagerie (1) stockent des messages qui ont été reçus par des abonnés (21-24) respectivement avec une identification de l'abonné (S) qui a déposé le message (M),
**en ce que** des abonnés adressent des messages à des abonnés et/ou groupes d'abonnés dans le fait qu'ils désignent à la centrale de messagerie (1) les abonnés concernés et/ou groupes d'abonnés par la parole,
**en ce qu'**un module de reconnaissance vocale (8) identifie dans la centrale de messagerie (1) les abonnés et/ou groupes d'abonnés cités par l'abonné dans ladite liste (41) de l'abonné considéré et
**en ce que** des réponses d'un abonné, auquel ont été transmis des messages, sont réceptionnées et transmises par la centrale de messagerie (1).

11. Procédé selon la revendication précédente, **caractérisé en ce qu'**au moins certaines desdites identifications d'abonnés (N, R, G) sont stockées sous forme de signaux vocaux.

12. Procédé selon l'une des revendications 10 ou 11, **caractérisé en ce que** des informations de statut relatives à la transmission de messages à des abonnés sont stockées et **en ce que** des messages non transmis avec succès peuvent être transmis à nouveau.

13. Procédé selon l'une des revendications 10 à 12, **caractérisé en ce qu'**au moins une grille de tarif (9) est surveillée et au moins certains messages sont transmis aux abonnés destinataires à des horaires tarifaires avantageux.

14. Procédé selon l'une des revendications 10 à 13, **caractérisé en ce que** des informations statistiques sur la charge de trafic dans ledit réseau téléphonique (2) sont stockées dans un tableau (61) et **en ce qu'**au moins certains messages sont transmis à des périodes de charges de trafic moindre aux abonnés destinataires.

15. Procédé selon l'une des revendications 10 à 14, **caractérisé en ce qu'**au moins certains messages sont transmis par Intemet.

16. Procédé selon l'une des revendications 10 à 15, **caractérisé en ce que** des messages d'un abonné auquel ont été transmis des messages, peuvent être réceptionnés, stockés et être adressés à un groupe d'abonnés sous forme de réponse.

17. Procédé selon l'une des revendications 10 à 16, **caractérisé en ce que** lesdites listes (41) sont administrées par la parole par au moins certains abonnés.

18. Support informatique de données, qui contient des données codées qui représentent un programme d'ordinateur lequel permet de commander une centrale de messagerie (1) selon l'une des revendications 1 à 9 de manière à mettre en oeuvre un procédé selon l'une des revendications 10 à 17.
